# EUROPÄISCHE PATENTANMELDUNG

(11) **EP 0 894 994 A2**
(43) Veröffentlichungstag der Anmeldung: **03.02.1999**
(21) Anmeldenummer: 98250218.9
(22) Anmeldetag: 17.06.1998
(51) Int. Cl.: F16D 65/56, B61H 15/00

(54) **Betätigungseinrichtung für verschleissspielbehaftete Maschinenelemente, insbesondere für Bremsen von Schienenfahrzeugen**

(30) Priorität: 30.07.1997 DE 19734540
(71) Anmelder: MANNESMANN Aktiengesellschaft, 40213 Düsseldorf (DE)
(72) Erfinder: Niederstadt, Jörg, Dr.-Ing., 30966 Hemmingen/Devese (DE); Kemner, Axel, Dipl.-Ing., 30916 Isernhagen (DE); Stoffels Ralf, Dipl.-Ing. (FH), 29593 Schwienau (DE)
(74) Vertreter: Presting, Hans-Joachim, Dipl.-Ing.

(57) **Zusammenfassung**

Um bei einer Betätigungseinrichtung für verschleißspielbehaftete Maschinenelemente, insbesondere für Bremsen von Schienenfahrzeugen, mit einer druckmittelbetriebenen Kolben-Zylinder-Einheit (1), deren Kolbenstange (17) mit einer verschleißspielausgleichenden Nachstelleinrichtung (2) in Form einer Stellmutter-Spindel-Baugruppe verbunden ist, einen einfachen Aufbau, einen geringen Druckluftverbrauch sowie eine Nachstellung des Verschleißspieles unter Last zu ermöglichen, wird erfindungsgemäß vorgeschlagen, daß die hülsenartige Stellmutter (4) der Stellmutter-Spindel-Baugruppe eine Außenverzahnung (27) aufweist, die mit einem automatisch betätigbaren und die Stellmutter (4) zumindest in eine Drehrichtung bewegbaren Stellantrieb (9,27) in Eingriff steht, wobei eine elektronische Steuereinheit (11) in Abhängigkeit der mittels eines Sensors (13,14) gemessenen Stellung eines mit der Kolbenstange (7) verbundenen Bremskolbens (12) das Stellsignal zum Verschleißspielausgleich generiert und an den Stellantrieb (9,27) durchsteuert.

## Beschreibung

Die Erfindung betrifft eine Betätigungseinrichtung für verschleißspielbehaftete Maschinenelemente, insbesondere für Bremsen von Schienenfahrzeugen gemäß dem Oberbegriff des Patentanspruches 1.

Als verschleißspielbehaftete Maschinenelemente im Sinne der vorliegenden Erfindung werden Maschinenelemente wie Kupplungen oder Bremsen angesehen. Derartige Maschinenelemente werden insbesondere zur Übertragung von Antriebs- bzw. Bremskräften bei Schienenfahrzeugen eingesetzt. Zum Unterbrechen und Schließen des Kraftflusses kommen Beläge zum Einsatz, die zum einen hohe thermische Beanspruchungen standhalten und zum anderen einen günstigen Kraftflußverlauf ermöglichen. Diese Beläge unterliegen einem Verschleiß, der ein sich allmählich vergrößerndes Verschleißspiel verursacht. Zum Ausgleich dieses Verschleißspiels sind Nachstelleinrichtungen bekannt.

So geht beispielsweise aus der EP 0 174 690 eine gattungsgemäße Nachstelleinrichtung nach Art einer Stellmutter-Spindel-Baugruppe zum Verschleißspielausgleich für Bremsen hervor. Diese Nachstelleinrichtung baut auf einer Steuerhülse auf, die unter Federkraft stehend über eine erste Kupplung verhindert, daß eine Stellmutter über eine Drehbewegung eine Längsverstellung der Kolbenspindel und insoweit eine Nachstellung bewirkt. Nach Durchlaufen eines vorbestimmten Spielweges wird durch Verschieben der Kolbenstange über einen bestimmten Weg hinaus die erste Kupplung gelöst, so daß die Verstellung des Spielweges entsprechend dem eingetretenen Belagverschleiß erhöht werden kann.

Eine weitere Kolbenvorschubbewegung hat das Einkuppeln einer zweiten Kupplung zur Folge, so daß daraufhin die Verstellung der Stellmutter auf der Spindel gestoppt wird. Dieser komplizierte Mechanismus für das Ein- und Auskuppeln der Stellmutter verursacht einen hohen Bauteil- und Montageaufwand für die Fertigung dieser Nachstelleinrichtung. Andererseits stellt der Einsatz des zugrundeliegenden Stellmutter-Spindel-Prinzips zur Nachstellung jedoch eine recht robuste Lösung dar, die sich in der Praxis bewährt hat.

Wie aus der DE-OS 22 01 082 hervorgeht, wird eine gattungsgemäße Nachstelleinrichtung für Schienenfahrzeugbremsen in Verbindung mit einer Kolben-Zylinder-Einheit zur Bremsbetätigung und einem Bremsgestänge zur Bremskraftübertragung eingesetzt.

Bei den bekannten gattungsgemäßen Nachstelleinrichtungen ist eine Verstellung der Stellmutter-Spindel-Baugruppe zum Spielausgleich nur bei Lastwechsel unter Durchfahren eines verschleißverursachenden Kupplungsvorganges möglich. Ein weiteres Problem bekannter Nachstelleinrichtungen stellt der von hohen Zylinderhüben zum Betrieb des Nachstellmechanismus verursachte hohe Druckluftverbrauch dar.

Der Erfindung liegt daher die Aufgabe zugrunde, eine Betätigungseinrichtung, insbesondere für Bremsen von Schienenfahrzeugen, zu schaffen, die sich durch einen einfachen und verschleißarmen Mechanismus zur Verschleißspielnachstellung auszeichnet und weiterhin mit nur geringem Druckluftverbrauch auch unter Last betrieben werden kann.

Die Erfindung wird ausgehend von einer Betätigungseinrichtung gemäß dem Oberbegriff des Patentanspruches 1 in Verbindung mit dessen kennzeichnenden Merkmalen gelöst.

Die Erfindung schließt die technische Lehre ein, daß eine hülsenartige Stellmutter der Stellmutter-Spindel-Baugruppe eine Außenverzahnung aufweist, die mit einem automatisch betätigbaren und die Stellmutter zumindest in eine Drehrichtung bewegbaren Stellantrieb in Eingriff steht. Dabei generiert eine Steuereinheit in Abhängigkeit der mittels eines Sensors gemessenen Stellung eines mit der Kolbenstange verbundenen Bremskolbens das Stellsignal zum Verschleißspielausgleich und steuert es an den Stellantrieb durch. Diese einfach aufgebaute Betätigungseinrichtung, bei der an Stelle eines komplizierten Mechanismus auf eine elektronische Ansteuerung zurückgegriffen wird, ist in der Lage, den Nachstellvorgang selbst unter Last vorzunehmen. Weil die Bewegung des Bremskolbens von der Nachstellbewegung entkoppelt ist, werden geringere Druckluftverbräuche erzielte.

Vorzugsweise ist der Stellantrieb als Druckmittelzylinder ausgebildet, dessen Kolbenstange nach Art eines Raststiftes in die äußere Verzahnung der hülsenartigen Stellmutter zum Eingriff kommt. Dabei kann zur Rückdrehsicherung der Stellmutter in deren Verzahnung eine über einen federbelasteten Lösezug lösbare Sperrklinke vorgesehen werden. Durch die Verwendung dieses Rast-Schub-Prinzips liegt hier ein einfach aufgebauter Stellantrieb vor, der eine taktweise Verstellung der Stellmutter in eine Drehrichtung ermöglicht. Alternativ dazu kann auch auf elektromotorische Mittelwie beispielsweise Schrittmotoren - zurückgegriffen werden.

Um ein Rückstellen der Stellmutter - beispielsweise bei Montage neuer Bremsbeläge - zu ermöglichen, ist es erfindungsgemäß vorgesehen, daß die Kolbenstange mittels einer Feder und einem Anschlag im Bereich der Verzahnung der Stellmutter gehalten wird. Dabei ist der Druckmittelzylinder um ein Lager aus dem Bereich der Verzahnung schwenkbar.

Eine weitere, die Erfindung verbessernde Maßnahme besteht darin, daß der Sensor entweder als digitaler Endlagenschalter oder Initiator als auch als analoger Magnetfeldschalter ausgeführt sein kann. Im ersteren Fall ermöglicht der Einsatz eines Endlagenschalters eine einfache Verschleißgrenzenerkennung des Belages durch Abgabe eines binären Signals. Über einen analog wirkenden Sensor - wie beispielsweise dem Magnetfeldschalter - ist durch das analoge Meßsignal eine Prognose der Verschleißgrenze des Belages möglich. Alternativ dazu kann auch zur Diagnose des Verschleißzustandes der axiale Weg der hülsenartigen Stellmutter über eine separate Wegmeßeinrichtung gemessen werden. In einfachster Form kann diese Wegmeßeinrichtung aus einem mit der Stellmutter axial gekoppelten Schiebewiderstand bestehen.

Vorzugsweise weist die Stellmutter zwei koaxial verlaufende entgegengesetzt angeordnete Innengewindeabschnitte auf, die mit endseitig je an der Kolbenstange und dem Bremsgestänge angeordneten Außengewindeabschnitten im Eingriff stehen. Zur axialen Verstellbarkeit der Kolbenstange bezüglich dem Bremsgestänge ist der erste Innengewindeabschnitt gegenläufig zum zweiten Innengewindeabschnitt ausgebildet. Durch diese Anordnung kann selbst bei einer geringen Verdrehung der Stellschraube ein relativ großer Nachstellhub erzielt werden. Ferner ist der Betrag der anliegenden Bremskraft über den Druck im Druckmittelzylinder, der dem rückstellenden Drehmoment an der Stellschraube entspricht, ermittelbar und einer Bremsensteuerung zuführbar. Altemativ zu einer Stellmutter mit zwei gegenläufigen Innengewindeabschnitten kann die Stellmutter auch nur einseitig einen Innengewindeabschnitt aufweisen. Dieser ist entweder endseitig mit der Kolbenstange oder dem Bremsgestänge über ein dortiges Außengewinde verbunden. Die Stellmutter ist an ihrem dem Innengewindeabschnitt entgegengesetzten Ende fest oder drehbar und koaxial am Bremsgestänge bzw. an der Kolbenstange befestigt.

Erfindungsgemäß enthält die Kolben-Zylinder-Einheit zur Umsetzung einer integrierten Feststellbremsenfunktion einen innenliegenden Anschlagkolben, der nach Art eines Federspeicherzylinders einseitig von einer Feder beaufschlagt ist. Zur Arretierung in seiner Ruheposition ist der Anschlagkolben von einer Entriegelungseinheit - vorzugsweise nach Art einer Kugelsperre, wie sie aus der DE-PS 196 01 945 hervorgeht - gehalten. Der Anschlagkolben ist zur Bewegung in die Ruheposition entgegengesetzt zur Wirkrichtung der Feder über eine Druckkammer mit Druckmittel beaufschlagbar. Zur Umsetzung einer Betriebsbremsenfunktion ist ein Bremskolben benachbart zum Anschlagkolben in der Kolben-Zylinder-Einheit angeordnet. Der Bremskolben ist ebenfalls über die gemeinsame Druckkammer mit Druckmittel beaufschlagbar. Im Falle einer Betätigungseinrichtung für Bremsen ermöglicht diese Anordnung von Anschlagkolben und Bremskolben innerhalb einer Kolben-Zylinder-Einheit die Ausführung eines Entriegelungshubes der Feststellbremse bei in Eingriff stehender Betriebsbremse. Dies gewährleistet eine zusätzliche Sicherheit bei Betrieb der Bremse. Die Entriegelung der Feststellbremse kann wahlweise druckmittelbetrieben über eine zusätzlich integrierte Kolben-Zylinder-Einheit oder hilfsweise auch manuell über einen von Außen zugänglichen Stößel erfolgen. Alternativ dazu ist auch eine elektromagnetische Entriegelung denkbar.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine teilweise Schnittdarstellung in Längsansicht einer Betätigungseinrichtung für Bremsen von Schienenfahrzeugen und
- Fig. 2: einen Querschnitt durch die Nachstelleinrichtung von Figur 1 in der Ansicht A.

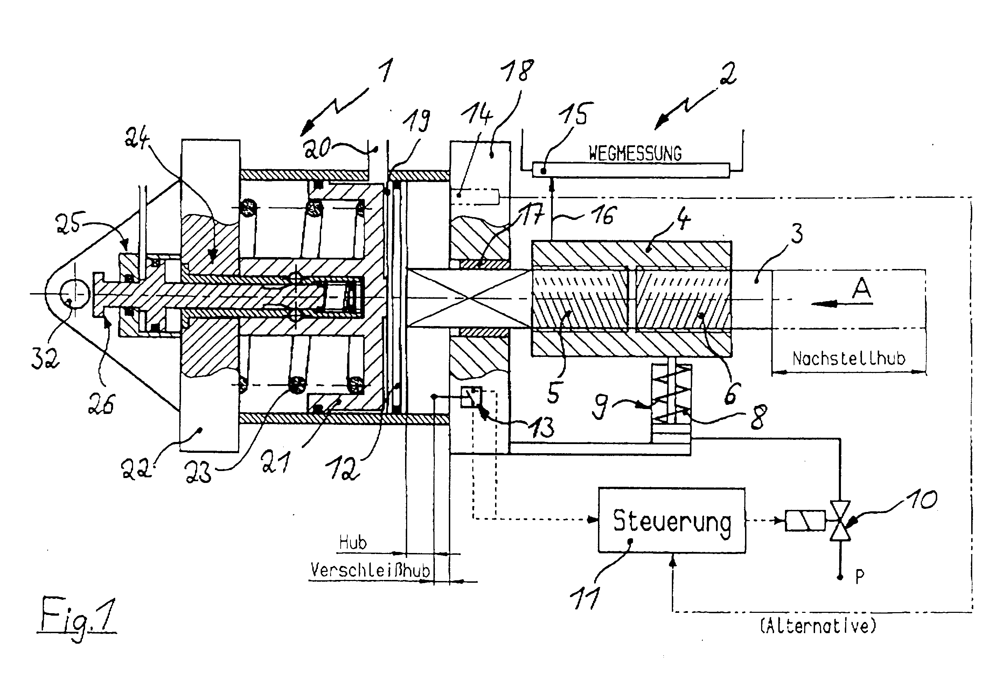

Die in Figur 1 gezeigte Betätigungseinrichtung für eine Bremse besteht im wesentlichen aus einer die Betätigungskraft erzeugenden Kolben-Zylinder-Einheit 1, der eine Nachstelleinrichtung 2 nachgeschaltet ist, welche die Betätigungskraft an ein Bremsgestänge 3 weiterleitet. Die Nachstelleinrichtung 2 besteht aus einer Stellmutter 4, die zwei gegenläufige Innengewindeabschnitte 5 und 6 aufweist. Der Innengewindeabschnitt 5 ist mit einer Kolbenstange 7 der Kolben-Zylinder-Einheit 1 verbunden, die zu diesem Zweck endseitig einen Außengewindeabschnitt besitzt. Der andere Innengewindeabschnitt 6 der Stellmutter 4 steht mit dem Bremsgestänge 3 in Eingriff, welches ebenfalls einen endseitigen Außengewindeabschnitt aufweist. Damit führt eine Verdrehung der Stellmutter 4 in eine Richtung zu einer Verlängerung der Kolbenstange 7 zum Zwecke eines Verschleißspielausgleichs. Als Stellantrieb für die Stellmutter 4 ist ein federrückgestellter Druckmittelzylinder 8, 9 vorgesehen, dessen Kolbenstange in einer aus dieser Figur nicht ersichtlichen Außenverzahnung der Stellmutter 4 durch Ausführen einer Schubbewegung rastend zum Eingriff kommt. Der Stellantrieb wird über ein elektropneumatisches Wegeventil 10 angesteuert. Das Stellsignal wird dem Ventil 10 über eine Steuereinheit 11 zugeführt. Die Steuereinheit 11 generiert das Stellsignal in Abhängigkeit der Stellung des Bremskolbens 12 der Kolben-Zylinder-Einheit 1. Dieser Eingangswert wird über einen Sensor gemessen. Der Sensor kann zum einen als einfacher binärer Endlagenschalter 13 ausgeführt sein, der bei Kontakt mit dem Bremskolben 12 schaltet und somit die Steuereinheit 11 sowie dem Stellantrieb eine Nachstellung an der Betätigungseinrichtung auslöst. Der Betrag des Nachstellhubes steht in funktionaler Abhängigkeit vom Hub des Bremskolbens 12 und ist der Steuereinheit 11 als Parameter frei vorgebbar. Der Sensor zur Ermittlung des Eingangswertes für die Steuereinheit 11 kann alternativ dazu auch als analoger Signalgeber, beispielsweise als Magnetfeldgeber 14 ausgeführt sein. Der Einsatz des Magnetfeldgebers 14 hat den Vorteil, daß der tatsächliche Verschleißzustand des Belages, also nicht nur der Grenzverschleißzustand ermittelbar ist und der Nachstellhub bei Erreichen des frei festlegbaren Grenzverschleißwertes ausführbar ist. Über den tatsächlichen Verschleißzustand kann beispielsweise auch eine Prognose für das Wartungsintervall erfolgen. Eine andere analoge Verschleißzustandsermittlung für die Bremsbeläge läßt sich auch über eine Wegmessung an der Stellmutter 4 realisieren. Die Wegmessung erfolgt über einen zur Stellmutter 4 achsparallel angeordneten Schiebewiderstand 15. Der Schieber 16 des Schiebewiderstandes 15 ist dabei mit der Stellmutter 4 axial verschiebbar verbunden. Das Gehäuse des Schiebewiderstandes 15 ist demgegenüber ortsfest angeordnet.

Die zur Betätigung der Bremse vorgesehene Kolben-Zylinder-Einheit 1 vereint eine Feststell- sowie eine Betriebsbremsfunktion. Die Betriebsbremsfunktion wird über einen Bremskolben 16, der längsbeweglich in einem Zylindergehäuse 17 angeordnet ist, realisiert. Mittig vom Bremskolben 16 geht orthogonal die Kolbenstange 7 aus, die über einen druchbrochenen und mit einer Dichtung 17 versehenen Zylinderdeckel 18 mit der Stellmutter 4 - wie oben beschrieben - in Verbindung steht. Der Bremskolben 16 ist über eine Druckkammer 19 zur Ausführung der Bremsbetätigung beaufschlagbar. Dazu ist am Zylindergehäuse 17 ein Druckmittelanschluß 20 angeordnet. Der Bremskolben 16 ist über das Bremsgestänge 3 federrückgestellt. Neben dieser Betriebsbremse ist auch eine Feststellbremse in der Kolben-Zylinder-Einheit 1 integriert. Die Feststellbremse ist nach Art eines Federspeicherzylinders ausgeführt. Sie besitzt einen Anschlagkolben 21, der gegenüber dem Bremskolben 16 angeordnet ist und ebenfalls über die Druckkammer 19 zur Rückstellung beaufschlagbar ist. Auf der anderen Seite des Anschlagkolbens 21 wirkt eine zwischen einem Zylinderdeckel 22 und dem Anschlagkolben 21 angeordnete Feder 23. In der aus Figur 1 ersichtlichen Ruheposition der Festellbremse, d. h. im unbetätigten Zustand, ist die Feder 23 gespannt. Eine Entriegungseinheit 24 nach Art einer Kugelsperre ermöglicht das Auslösen der Feststellbremse. Dazu wird eine integrierte Kolben-Zylinder-Einheit 25 derart mit Druckmittel beaufschlagt, daß ihr Kolben die Entriegelung der Feststellbremse auslöst. Alternativ dazu gewährleistet ein Stößel 6 auch eine manuelle Betätigung. Die Kraft der Feder 23 bewegt den Anschlagkolben 21 in Richtung Bremskolben 12 und veranlaßt diesen zur Bremsbetätigung. Damit ist die Feststellbremse ausgelöst. Zur Rückstellung in die Ruheposition ist die Druckkammer 19 zu beaufschlagen. Dabei verharrt konstruktionsbedingt der Bremskolben 12 so lange in der Betätigungsstellung der Bremse, bis der Anschlagkolben 21 der Feststellbremse wieder arretiert ist. Durch nachfolgendes Entlüften der Druckkammer 19 wird die Bremse wieder freigegeben.

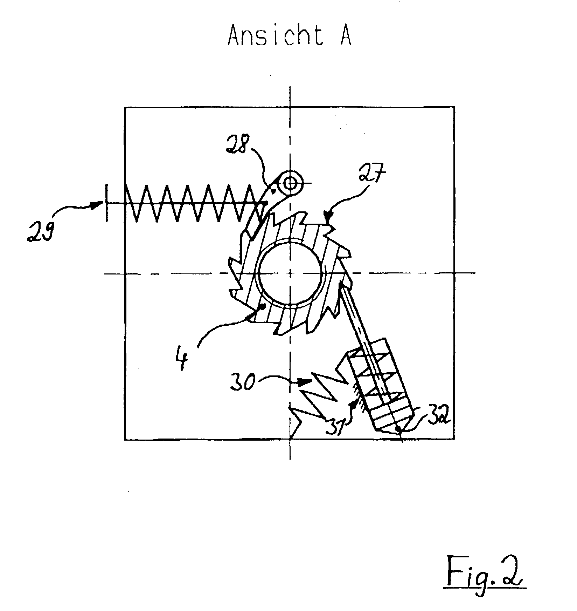

Eine aus Figur 2 ersichtliche Verzahnung 27 der Stellmutter 4 wirkt derart mit dem Druckmittelzylinder 9 als Stellantrieb zusammen, daß eine Hubbewegung des Druckmittelzylinders 9 eine Verdrehung der Stellschraube 4 zur taktweisen Nachstellung eines Verschleißspiels bewirkt. Zur Sicherung gegen eine rückläufige Bewegung ist eine einrastende Sperrklinke 28 vorgesehen. Über einen federbelasteten Lösezug 29 ist die Sperrklinke 28 manuell entsperrbar. Damit kann beispielsweise bei Belagwechsel eine Rückstellung des nachgestellten Verschleißweges erfolgen. Zu diesem Zweck ist der Druckmittelzylinder 9 über eine Feder 30 in Verbindung mit einem Anschlag 31 im Bereich der Verzahnung haltbar und gleichermaßen aus diesem Bereich durch Schwenken um ein Lager 32 entfernbar.

Da bei der erfindungsgemäßen Betätigungseinrichtung von einer rein mechanischen Verschleißspielnachstellung zu einer Verschleißspielnachstellung unter Einsatz elektronischer Komponenten übergegangen wird, ist neben einem einfacheren Aufbau der mechanischen Komponenten und einem geringen Druckluftverbrauch auch eine flexible Einsatzmöglichkeit der Betätigungseinrichtung, d. h. eine einfache Anpaßbarkeit an einsatzfallabhängige Parameter, gegeben.

### Bezugszeichenliste

- **1**: Kolben-Zylinder-Einheit
- **2**: Nachstelleinrichtung
- **3**: Bremsgestänge
- **4**: Stellmutter
- **5**: Innengewindeabschnitt
- **6**: Innengewindeabschnitt
- **7**: Kolbenstange
- **8**: Feder
- **9**: Druckmittelzylinder, federrückgestellt
- **10**: Wegeventil, elektropneumatisch
- **11**: Steuereinheit
- **12**: Bremskolben
- **13**: Endlagenschalter
- **14**: Magnetfeldgeber
- **15**: Schiebewiderstand
- **16**: Schieber
- **17**: Dichtung
- **18**: Zylinderdeckel
- **19**: Druckkammer
- **20**: Druckmittelanschluß
- **21**: Anschlagkolben
- **22**: Zylinderdeckel
- **23**: Feder
- **24**: Entriegelungseinheit
- **25**: Kolben-Zylinder-Einheit
- **26**: Stößel
- **27**: Verzahnung
- **28**: Sperrklinke
- **29**: Lösezug
- **30**: Feder
- **31**: Anschlag
- **32**: Lager

## Patentansprüche

1. Betätigungseinrichtung für verschleißspielbehaftete Maschinenelemente, insbesondere für Bremsen von Schienenfahrzeugen, mit einer druckmittelbetriebenen Kolben-Zylinder-Einheit, deren Kolbenstange mit einer verschleißspielausgleichenden Nachstelleinrichtung in Form einer Stellmutter-Spindel-Baugruppe verbunden ist,
dadurch gekennzeichnet,
daß die hülsenartige Stellmutter (4) der Stellmutter-Spindel-Baugruppe eine Verzahnung (27) aufweist, die mit einem automatisch betätigbaren und die Stellmutter (4) zumindest in eine Drehrichtung bewegbaren Stellantrieb in Eingriff steht, wobei eine elektronische Steuereinheit (11) in Abhängigkeit der mittels eines Sensors gemessenen Stellung eines mit der Kolbenstange verbundenen Bremskolbens (12) das Stellsignal zum Verschleißspielausgleich generiert und an den Stellantrieb durchsteuert.

2. Betätigungseinrichtung nach Anspruch 1,
dadurch gekennzeichnet,
daß der Stellantrieb als Druckmittelzylinder (9) ausgebildet ist, dessen Kolbenstange nach Art eines Raststiftes in die Verzahnung (27) der hülsenartigen Stellmutter (4) zum Eingriff kommt.

3. Betätigungseinrichtung nach Anspruch 2,
dadurch gekennzeichnet,
daß zur Rückdrehsicherung der Stellmutter (4) in deren Verzahnung (27) eine über einen federbelasteten Lösezug (29) lösbare Sperrklinke (28) zum Eingriff kommt.

4. Betätigungseinrichtung nach Anspruch 2 oder 3,
dadurch gekennzeichnet,
daß zum Stellen der Stellmutter (4) die Kolbenstange des Druckmittelzylinders (9) mittels einer Feder (30) und einem Anschlag (31) im Bereich der Verzahnung (27) gehalten ist, wobei zum Rückstellen der Stellmutter (4) der Druckmittelzylinder (9) aus dem Bereich der Verzahnung (27) um ein Lager (32) schwenkbar ist.

5. Betätigungseinrichtung nach Anspruch 1,
dadurch gekennzeichnet,
daß der Sensor als binärer Endlagenschalter (13) oder als Initiator ausgeführt ist.

6. Betätigungseinrichtung nach Anspruch 1,
dadurch gekennzeichnet,
daß der Sensor als analoger Magnetfeldgeber (14) ausgeführt ist.

7. Betätigungseinrichtung nach einem der vorstehenden Ansprüche,
dadurch gekennzeichnet,
daß zur Diagnose des Verschleißzustandes der axiale Weg der hülsenartigen Stellmutter (4) über eine Wegmeßeinrichtung meßbar ist.

8. Betätigungseinrichtung nach Anspruch 7,
dadurch gekennzeichnet,
daß die Wegmeßeinrichtung als Schiebewiderstand (15) ausgebildet ist.

9. Betätigungseinrichtung nach einem der vorstehenden Ansprüche,
dadurch gekennzeichnet,
daß die Stellmutter (4) zwei koaxial verlaufende entgegengesetzt angeordnete Innengewindeabschnitte (5, 6) aufweist, die mit endseitig je an der Kolbenstange (7) und dem Bremsgestänge (3) angeordneten Außengewindeabschnitten im Eingriff stehen, wobei zur axialen Verstellbarkeit der Kolbenstange (7) bezüglich dem Bremsgestänge (3) der erste Innengewindeabschnitt (5) gegenläufig zum zweiten Innengewindeabschnitt (6) ausgebildet ist.

10. Betätigungseinrichtung nach einem der vorstehenden Ansprüche,
dadurch gekennzeichnet,
daß die Stellmutter (4) einen einseitigen und koaxial verlaufenden Innengewindeabschnitt aufweist, der mit einem endseitig an der Kolbenstange (7) oder dem Bremsgestänge (3) angeordneten Außengewindeabschnitt im Eingriff steht, wobei die Stellmutter (4) an ihrer dem Innengewindeabschnitt entgegengesetzten Seite fest oder drehbar und koaxial am Bremsgestänge (3) bzw. an der Kolbenstange (7) befestigt ist.

11. Betätigungseinrichtung nach einem der vorstehenden Ansprüche,
dadurch gekennzeichnet,
daß die Kolben-Zylinder-Einheit (1) für eine Feststellbremse einen Anschlagkolben (21) enthält, der nach Art eines Federspeicherzylinders einseitig von einer Feder (23) beaufschlagt ist und zur Arretierung in einer Ruheposition (Fig.1) von einer Entriegelungseinheit (24) gehalten ist, wobei der Anschlagkolben (21) zur Bewegung in die Ruheposition (Fig.1) entgegengesetzt zur Wirkrichtung der Feder (23) über eine Druckkammer (19) mit Druckmittel beaufschlagbar ist und daß der für eine Betriebsbremse die Kolben-Zylinder-Einheit (1) vorgesehene Bremskolben (12) koaxial und benachbart zum Anschlagkolben (21) angeordnet ist und ebenfalls über die gemeinsame Druckkammer (19) mit Druckmittel beaufschlagbar ist.

12. Betätigungseinrichtung nach einem der vorstehenden Ansprüche,
dadurch gekennzeichnet,
daß die Entriegelungseinheit (24) nach Art einer Kugelsperre ausgeführt ist, die über eine integrierte Kolben-Zylinder-Einheit (25) druckmittelbetrieben oder hilfsweise manuell über einen Stößel (26) betätigbar ist.
